Europäisches Patentamt

European Patent Office

Office européen des brevets

(11) Veröffentlichungsnummer: **0 396 142**
**A1**

(12) **EUROPÄISCHE PATENTANMELDUNG**

(21) Anmeldenummer: **90108394.9**

(51) Int. Cl.⁵: **C02F 3/30**

(22) Anmeldetag: **03.05.90**

(30) Priorität: **03.05.89 DD 328199**
**03.04.90 DD 339359**

(43) Veröffentlichungstag der Anmeldung:
**07.11.90 Patentblatt 90/45**

(84) Benannte Vertragsstaaten:
**BE DE ES FR GR IT LU NL**

(71) Anmelder: **VEB PROJEKTIERUNG WASSERWIRTSCHAFT**
**Thälmannplatz 2**
**DDR-4002 Halle/Saale(DD)**

(72) Erfinder: **Peukert, Volkmar, Dr.**
**Holbeinstrasse 48**
**DDR-8019 Dresden(DD)**
Erfinder: **Holesovsky, Ulrich, Dr.**
**Hanoier Strasse 69**
**DDR-4070 Halle/S(DD)**

Erfinder: **Voigt, Wolf-Rüdiger**
**Uranusstrasse 24**
**DDR-4050 Halle/S(DD)**
Erfinder: **Böttcher, Dieter**
**Kutousowstrasse 24**
**DDR-9071 Karl-Marx-Stadt(DD)**
Erfinder: **Schüppel, Heinz**
**Salvador-Allendestrasse 218**
**DDR-9044 Karl-Marx-Stadt(DD)**
Erfinder: **Lange, Klaus-Peter, Dr.**
**Thomas-Müntzer-Platz 5**
**DDR-8019 Dresden(DD)**

(74) Vertreter: **Patentanwälte Beetz sen. - Beetz jun. Timpe - Siegfried - Schmitt-Fumian-Mayr**
**Steinsdorfstrasse 10**
**D-8000 München 22(DE)**

(54) **Verfahren und Vorrichtungen zur Steuerung biologischer Prozesse zur Phosphor- und Stickstoffeliminierung in Belebtschlammanlagen.**

(57) Die Erfindung betrifft ein Verfahren und Vorrichtungen zur Steuerung biologischer Prozesse, vor allem von Anlagen zur Reinigung kommunaler, industrieller und landwirtschaftlicher Abwässer, bei denen große Schwankungen in der BSB-Fracht auftreten. Erfindungsgemäß erfolgt die Entfernung von Phosphor und Stickstoff aus dem Abwasser durch Stimulierung oder Hemmung der wichtigsten biologischen Prozesse in Abhängigkeit von der zulaufenden BSB-Fracht bzw. vom Prozeßverlauf entscheidender Teilprozesse.

Bei belastungsstarken bzw. -schwachen Zeiten erfolgt im Komplex der Vorklärung eine Abwasser- und/oder Schlammspeicherung bzw. eine gezielte Zuführung in eine Anlage mit anoxischen Stufen (I, III), einer anaeroben Stufe (2) und einer aeroben Stufe (5) sowie Steuerstufen (4.1, 4.2).

Die Speicherung des Abwassers bzw. Schlammes und die gezielte Zuführung und Verteilung sowie der Einsatz der Steuerstufen im aeroben Bereich bewirken eine hohe Eliminierungsleistung und Prozeßstabilität.

Figur 1

## Verfahren und Vorrichtung zur Steuerung biologischer Prozesse zur Phosphor- und Stickstoffeliminierung in Belebtschlammanlagen

Die Erfindung betrifft ein Verfahren sowie Vorrichtungen zur Steuerung biologischer Prozesse bei der Reinigung kommunaler, industrieller und landwirtschaftlicher Abwässer.

Vor allem auf Anlagen, bei denen große Schwankungen in der BSB-Fracht auftreten, ist ein zweckmäßige Anwendung gegeben. Es ist bekannt, daß an den biologischen Prozessen der gleichzeitigen P- und N-Eliminierung in Belebtschlammanlagen verschiedene Mikroorganismengruppen in unterschiedlichem Maße beteiligt sind. Zu nennen sind vor allem Ammonikanten, Nitrifikanten, Denitrifikanten, hydrolytische und P-speichernde Organismen und Organismengruppen, die die Vielzahl organischer Abwasserinhaltsstoffe abbauen. Auf Grund teilweise unterschiedlicher Milieuansprüche der Mikroorganismen kommt es nahezu zyklisch wiederkehrend zu Störungen, die sich auf die Prozeßstabilität der bekannten Verfahren und somit auf die Ablaufbeschaffenheit nachteilig auswirken.

Hauptursache der Störungen sind die ausgeprägten Schwankungen der BSB-Fracht im Tages- und Wochenverlauf. So gelangen z.B. während der Nachtstunden und am Wochenende im Vergleich zu den Lastspitzen zeitweilig über 80 % weniger biologisch nutzbare organische Stoffe in die Anlage.

Das Nährsubstratangebot für Mikroorganismen wird somit ständig verändert. Dadurch sind maximale Stoffwechselleistungen oder hohe Wachstumsraten ausgeschlossen. Meist verändert sich mit der Abnahme der BSB-Fracht auch das Gewichtsverhältnis biologisch nutzbarer Stoffe und zu eliminierender Stoffe (P, N) zuungunsten biologischer Prozesse. Die meist zyklisch wiederkehrenden Lastschwankungen wirken sich in der Weise aus, daß z.B. bei geringen BSB-Frachten die Nitrifikation optimal abläuft, dagegen wird die Denitrifikation infolge mangelnden Kohlenstoffangebotes mehr oder weniger eingeschränkt. In EP-A1 19203 wird ein 2-stufiges Verfahren zur Nitrifikation und Denitrifikation beschrieben.

In der zweiten Stufe - bestehend aus anoxischem und aerobem Beckenteil - wird durch einen Abwasserteilstrom das zur Durchführung der Denitrifikation erforderliche Substrat bereitgestellt und anschließend nach aerober Behandlung durch einen internen Rücklauf erneut der Denitrifikation zugeführt. Außerdem erfolgt die Zugabe von Methan oder Methanol zur Substratanreicherung. Im Hinblick auf die Denitrifikation ergibt sich eine zweckmäßige Lösung.

Soweit aber gleichzeitig die P-Eliminierung erfolgen soll, ergibt sich das Problem, daß das für die P-Speicherung wichtige anaerobe Milieu nicht gewährleistet ist.

Nitrateintrag in eine anaerobe Stufe ist physiologisch einer Belüftung gleichzusetzen. Die in einer anaeroben Stufe gewollten biologischen Prozesse, wie anaerobe Hydrolyse- und Gärungsprozesse und die vorrangige Aufnahme niedermolekularer organischer Stoffe durch P-speichernde Mikroorgamismen werden dadurch gestört. Die verfahrenstechnisch wichtigen niedermolekularen Verbindungen können unter diesen Bedingungen auch von Nahrungskonkurrenten aufgenommen werden.

Bei erhöhten BSB-Frachten laufen die Prozesse der Denitrifikation und der P-Speicherung relativ stabil ab. Dagegen kann die Nitrifikation durch übermäßiges Kohlenstoffangebot gehemmt werden. Die Nitrifikation ist jedoch die Grundvoraussetzung für den Gesamtprozeß der bilogischen Stickstoffeliminierung.

Es ist auch an der Kombination der Verfahren zur biologischen Stickstoff- und Phosphoreliminierung gearbeitet worden. Im Längsbecken werden anaerobe Zonen für die biologische P-Entfernung, anoxische Zonen für die Denitrifikation und aerobe Zonen für die Nitrifikation und den Kohlenstoffabbau geschaffen.

Ein interner Denitrifikationskreislauf durch Abführung eines Teilstromes von der aeroben in die anoxische Stufe ist vorgesehen.

Nachteilig dabei ist, daß die anaerobe Zone immer noch durch im Rücklaufschlamm enthaltenes Nitrat beeinflußt wird. Mit dieser Verfahrenskombination konnten ständige niedrige P-Ablaufwerte nicht erreicht werden. Zusätzlich ist es daher bis jetzt erforderlich, vor dem Ablauf der aeroben Stufe Fällmittel einzusetzen bzw. die Fällmittelzugabe vorzusehen.

Der Erfindung liegt die Aufgabe zugrunde, ein Verfahren zur Steuerung biologischer Prozesse zur Phosphor- und Stickstoffeliminierung durch Stimulierung oder Hemmung der wichtigsten bilogischen Prozesse in Abhängigkeit von der zulaufenden BSB-Fracht und/oder vom Prozeßverlauf entscheidender Teilprozesse sowie zu seiner Durchführung geeignete Vorrichtungen anzugeben. Dementsprechend ist die Belastbarkeit des Verfahrens zu erhöhen. Es soll die Phosphorfreisetzung unter anaeroben Bedingungen nicht durch im Rücklaufschlamm enthaltenes Nitrat beeinflußt werden

Die Aufgabe wird anspruchsgemäß gelöst. Die abhängigen Ansprüche betreffen vorteilhafte Ausgestaltungen.

Der nachfolgend beschriebenen erfindungsgemäßen Lösung liegt eine komplexe Betrachtung aller maßgeblichen mikrobiologischen Prozesse zugrunde.

Dabei ist zuerst eine Vergleichmäßigung der BSB-Zulauffracht entsprechend der Tages- bzw. Wochenganglinie erforderlich. Das erfolgt mit zeitweiliger Speicherung des Primärschlammes und späterer Freisetzung des BSB durch Schlammwäsche.

Durch eine gesteuerte Rückhaltung von BSB in der Vorklärung werden vor allem die das Verfahren störenden Lastspitzen weitgehend weggenommen.

Auf diese Weise erhält man in Form von BSB-haltigem Primärschlamm einen Vorrat von biologisch nutzbaren Kohlenstoffverbindungen. Ein Teil dieser Stoffe wird bestimmten Verfahrensstufen (Denitrifikation, anaerobe Stufe) während belastungsschwacher Nachtstunden zugeführt. Das geschieht in der Weise, daß der am Tage anfallende Primärschlamm vollständig oder teilweise eingedickt und gespeichert wird. Während der Lagerung kommt es im Schlamm zur Hydrolyse und zur Vergärung organischer Stoffe. Ein Teil der dabei entstehenden niedermolekularen Stoffwechselprodukte bildet wichtige Nährsubstrate für P-speichernde Mikroorganismen und Denitrifikanten.

Bei der Schlammabgabe ist als wesentlich herauszustellen, daß ein intensives Mischen von Schlamm und zufließendem Abwasser erfolgt (Schlammwäsche). Damit wird ein hoher Anteil des gebundenen BSB wieder rückgelöst. Auf diese Weise kann während der Nachtstunden der Kohlenstoffbedarf für P-speichernde Mikroorganismen und Denitrifikanten gedeckt werden. Störungen der P-Eliminierung infolge von Nitrateinbrüchen in die anaerobe Stufe können somit weitgehend verhindert werden. Weiter wird - außer der Steuerung mittels gespeicherten Überschußschlammes - eine Vergleichmäßigung der Tagesabwassermengen mit Hilffe des Vorklärbeckens vorgesehen.

Das Vorklärbecken ist in mehrere mindestens drei voneinander getrennte Beckenbereiche aufgeteilt. Es erfolgt eine gesteuerte Auffüllung durch Abwasserteilströme. Die Verweilzeit in der Vorkläreinrichtung beträgt vorteilhaft über 1,5 Stunden. Die einzelnen Becken werden nach einem vorgegebenen Ablauf während der belastungsschwachen Zeiten nacheinander entleert. Es ist vorgesehen, daß der Schlamm in der Schlammsammeltasche des Vorklärbeckens vor der Entleerung intensiv mit dem Abwasser gemischt wird, z.B. durch Kreislaufführung.

Ergänzend wird vorgeschlagen, bei kleineren Anlagen mit stark ausgeprägten Tagesschwankungen die Lastspitzen durch das zeitweilige Zuschalten eines mit immobilisierter und suspendierter Biomasse angefüllten Wirbelschichtreaktors weitgehend abzubauen. Dabei wird ein Teilstrom (ca. 10 Vol.%) über diesen Intensivreaktor geführt. Dieser wird überdurchschnittlich stark mit abbaubaren Stoffen belastet; BSB-Raumbelastung 10 - 15 kg $BSB/m^3 \cdot$ d. Die immobilisierte Biomasse wird während belastungsschwacher Zeiten kontinuierlich oder diskontinuierlich mit einem Minimum an Nährsubstraten und Sauerstoff versorgt.

Ein weiterer Verfahrensschritt zur Steuerung der biologischen Prozesse erfolgt durch die Zuführung von Teilströme des Abwasserzuflusses in bestimmte Behandlungsstufen. Ein Teilstrom wird einer anoxischen Denitrifikationsstufe, ein Teilstrom einer anaeroben Stufe und weiterhin ein Teilstrom in eine zweite anoxische Denitrifikationsstufe zugeführt.

Der Rücklaufschlamm wird je nach Erfordernis in die zwei Denitrifikationsstufen gegeben. Eine Beeinträchtigung des für die P-Eliminierung erforderlichen anaeroben Milieus erfolgt damit nicht mehr.

Eine weitere Vergleichmäßigung noch vorhandener Lastschwankungen und Verhinderung der negativen Auswirkungen wird erreicht durch die Anordnung von 2 Steuerstufen, wobei eine Steuerstufe vor der aeroben Stufe und weiterhin im mittleren Bereich der aeroben Stufe mindestens eine weitere Steuerstufe angeordnet ist.

Nachfolgend sind die mit der Steuerung gegebenen Möglichkeiten, auch unter Berücksichtigung bereits bekannter Verfahrensteilschritte, aufgezeigt.

Überlastung der Anlage (Tagesspitze):

Bezogen auf das Verfahren der P- und N-Eliminierung ist ein Überangebot an biologisch nutzbaren Kohlenstoffverbindungen zu verzeichnen. Die BSB-Raum- bzw. Schlammbelastung ist relativ hoch. Unter diesen Bedingungen laufen die Prozesse der P-Eliminierung und Denitrifikation problemlos ab. Dagegen ist die Stoffwechselintensität der Nitrifikation eingeschränkt. Die notwendigen Steuer- bzw. Verfahrensschritte sind:

Das Abwasser ist etwa zu gleichen Anteilen aufzuteilen - Zugabe in die erste Stufe (anoxisch) zur Denitrifikation, die zweite Stufe (anaerob) zur P-Rücklösung, und eine dritte Stufe (anoxisch) wiederum zur Denitrifikation.

Die aerobe Stufe zur Nitrifikation muß intensiviert werden, d.h. durch die Steuerstufen ist ausreichend Sauerstoff einzubringen. Es muß eine Senkung der BSB-Schlammbelastung erfolgen durch erhöhte Rückführung von Biomasse aus dem Nachklärbecken ($\geq$ 100 % Vol.% der Abwasserzulaufmenge) und aus der aeroben Stufe (ca. 250 Vol.%).

**Mittlere bis stärkere Belastung (Tagesmittel):**

Das BSB-Angebot für die P-Eliminierung und Denitrifikation ist ausreichend bis hoch. Die Nitrifikation ist zeitweilig noch gehemmt. Die Steuerschritte sind:
Die Abwasserverteilung erfolgt wie beim dem Zustand "Tagesspitze".
Zumindest in der ersten Steuerstufe ist eine Sauerstoffkonzentration von ca. 1,0 $g/m^3$ einzuhalten.
Die Schlammbelastung ist durch Rückführung von Biomasse aus dem Nachklärbecken (80-100 Vol.-%) und der aeroben Stufe (ca. 200 Vol.-%) zu reduzieren.

**Mittlere bis schwächere Belastung (24-Std.-Mittel):**

Die Nitrifikation verläuft normal bis optimal. Nitrateinbrüche in die anaerobe Stufe durch ungenügend Denitrifikation infolge Kohlenstoffmangel sind nicht auszuschließen. Die Steuerschritte sind:
In den 2 Steuerstufen wird der Belebtschlamm in Schwebe gehalten (Hemmung der Nitrifikation).
Es erfolgt Rückführung von nitrathaltigem Medium (Belebtschlamm) aus der Nachklärung in die erste Denitrifikationsstufe, dabei Medium auf 60 - 80 Vol.-% reduzieren.
Ein Teilstrom aus der Nachkärung wird der ersten Steuerstufe zugeführt.
Die Biomasserückführung aus der aeroben Stufe ist weiter einzuschränken (ca. 150 Vol.-%). Es erfolgt Zuführung von BSB aus dem Primärschlamm, wobei das Abwasser-Schlammgemisch der ersten Denitrifikationsstufe und der anaeroben Stufe zugegeben wird.

**Unterbelastung (Nachtmittel):**

Infolge sehr niedriger Schlammbelastung erfolgt starke Nitrifikation, jedoch durch Kohlenstoffmangel ist eine unzureichende Denitrifikation gegeben. Es erfolgen ein geringes Wachstum P-speichernder Mikroorgamismen, weiterhin Nitrateinbrüche in die anaerobe Stufe und somit Störungen der P-Eliminierung. Die Steuerschritte sind:
Die Steuerstufen sind anoxisch-anaerob zu betreiben (Hemmung der Nitrifikation).
Es erfolgt stark eingeschränkte Rückführung von Belebtschlamm aus dem Nachklärbecken (< 60 Vol.-%), ein Teil des Rücklaufschlammes wird der ersten Steuerstufe zugeführt.
Aus der aeroben Stufe ist die Rückführung stark einzuschränken bzw. völlig einzustellen.
Es ist BSB aus Primärschlammspeicherung für Denitrifikation und anaerobe Stufe zuzuführen.
Das zufließende und in der Vorklärung gespeicherte Abwasser ist ausschließlich in die erste Denitrifikationsstufe und die anaerobe Stufe einzuleiten.
Neben der Prozeßsteuerung in Abhängigkeit von der Zulaufbelastung sieht das Verfahren eine parallele Steuerung in Abhängigkeit von der Ablaufbeschaffenheit und von den Betriebszuständen vor. Dazu müssen die wichtigsten Gütekriterien wie Nitrat, Ammonium, Phosphat und BSB möglichst kontinuierlich im Ablauf der aeroben Stufe gemessen werden.
Folgende Betriebszustände können auftreten:
- Zu hoher Ammoniumwert;
Es ist die Nitrifikation zu begünstigen, d.h. Steuerstufen zeitweilig oder ständig belüften, Sauerstoffeintrag in aerobe Stufe erhöhen, Rückführung des Mediums in erhöhtem Maße aus der aeroben Stufe in die zweite Denitrifikationsstufe, Schlammbelastung durch Biomasserückführung senken.
- Erhöhte Nitratkonzentration;
Es ist die Denitrifikation zu stimulieren; Steuerstufen anoxisch betreiben (Umwälzung des Belebtschlammes unter Vermeidung von Sauerstoffeintrag), Sauerstoffkonzentration in aerobe Stufe senken, Rückführung des Mediums aus aerober Stufe in zweite Denitrifikationsstufe, BSB für Denitrifikation zuführen, anaerobe Stufe vor Nitrateinbrüchen schützen, Abwasser vorwiegend der ersten und zweiten Stufe zuführen.
- Ungünstiges BSB zu P- bzw. N-Verhältnis;
Durch Schlammwäsche BSB zuführen.
- Erhöhte Phosphorkonzentration;
Sollte dieser Fall trotz Anwendung der beschriebenen Verfahrensführung und Steuerschritte eintreten, wäre eine bekannte Methode die Zuführung von Eisensalzen, was jedoch die landwirtschaftliche Nutzung der

Schlämme eingeschränkt. Es wird in diesem Falle folgender Verfahrensweg vorgeschlagen:

Bei bestimmten Betriebszuständen, die eine verminderte P-Eliminierung erwarten lassen, wird ein festgelegter Teilstrom aus der P-reichen anaeroben Stufe in einem Mischreaktor mit einer solchen Menge Kalk versetzt, daß der pH-Wert des Mediums auf > 10 ansteigt. Dabei bildet sich schwerlösliches Calciumphosphat. Das auf diese Weise behandelte Gemisch wird der zweiten Denitrifikationsstufe zugeführt. Im Belebungsbecken lagert sich das Phosphat adsorptiv an die Belebtschlammflocken an und kann mit dem Überschußschlamm dem System entnommen werden. Die adsorptive Wirkung ist hier als wesentlich herauszustellen.

Die erfindungsgemäße Vorrichtung soll nachfolgend anhand von zwei Ausführungsbeispielen erläutert werden.

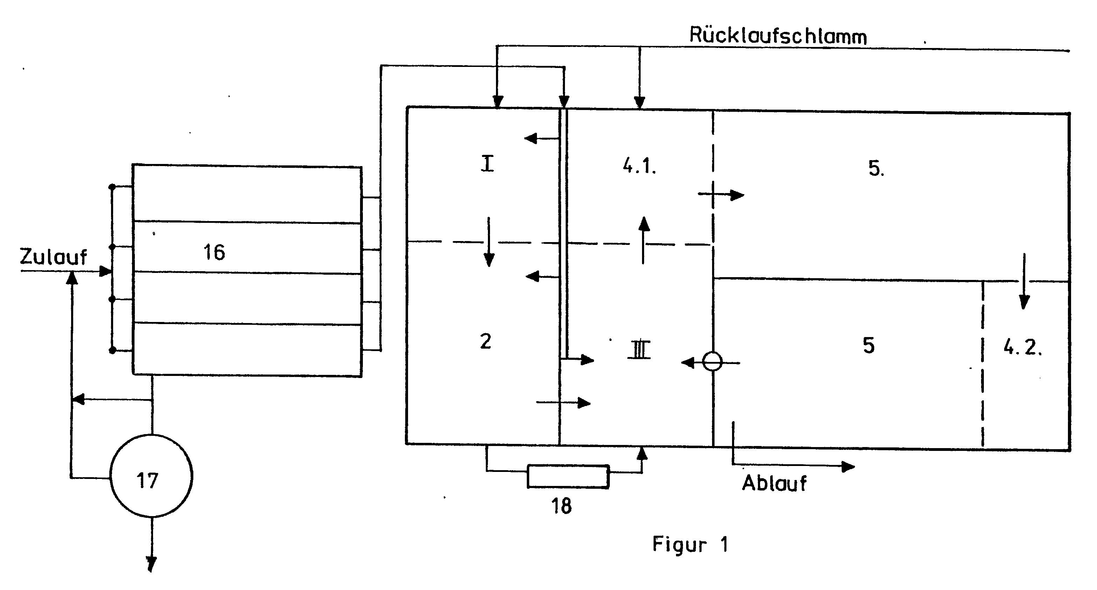

Bei dem 1. Ausführungsbeispiel gemäß Figur 1 besteht eine Anlage, mit der das Steuerverfahren zu realisieren ist, aus dem Komplex der Vorklärung mit dem Vorklärbecken 16 einschließlich in Längsrichtung abgetrennter Teilbereiche und einem Schlammspeicher 17. Die Prozesse der P- und N-Eliminierung laufen in einem Beckenblock ab, welcher aus den anoxischen Stufen I und III, der anaeroben Stufe 2, zwei Steuerstufen 4.1 und 4.2 und der aeroben Stufe 5 besteht. Die Steuerstufe 4.2 ist im mittleren Bereich der aeroben Stufe 5 angeordnet. Es ist ein interner Denitrifikationskreislauf durch Umpumpen von Stufe 5 nach Stufe III vorgesehen. Der Rücklaufschlamm aus der nicht dargestellten Nachklärung kann auf die Stufen I und 4.1 verteilt werden. Das zu reinigende Abwasser kann über eine Rinne in die Stufen I, 2,III gegeben werden. Über einen Mischreaktor 18 zur Unterstützung der Phosphoreliminierung kann einen Teilstrom von der anaeroben Stufe 2 in die anoxische Stufe III gegeben werden. Durch Kalkzugabe erfolgt eine pH-Werterhöhung auf pH > 10 in diesem Teilstrom. Es bildet sich Calciumphosphat, welches sich durch adsorptive Wirkung im weiteren Prozeß an die Belebtschlammflocken anlagert.

Am Beispiel einer Belebtschlammanlage mit einem Beckenvolumen von 21 000 m³, einem maximalen stündlichen Abwasserzufluß von 1 750 m³, einer BSB-Tageslast von 8600 kg, einer Belebtschlamm dichte von 3,5 kg/m³, einer BSB-Raumbelastung von 0.32 kg/m³•d und einer aus vier Becken bestehenden Vorkläreinrichtung mit einer max. Vorklärzeit von 2 Stunden erfolgen die weiteren Erläuterungen.

In Kläranlagen mit Industriewasseranteil muß im Tages- und Wochenverlauf mit ausgeprägten Schwankungen der Abwassermenge und der Abwasserbeschaffenheit gerechnet werden.

Im Falle der Beispielanlage verteilen sich die BSB-Lastschwankungen folgendermaßen:

|  | Wochentag | Wochenende |
|---|---|---|
| - Tagesspitze, Überlastung | 2 Std. | - |
| - Tagesmittel, mittlere bis hohe Belastung | 6 Std. | - |
| - 24-Std.-Mittel, mittlere bis niedrige Belastung | 8 Std. | 11 Std. |
| - Nachtmittel, Unterbelastung | 8 Std. | 15 Std. |

Nachfolgend wird gezeigt, in welchem Maße eine Vergleichmäßigung der BSB-Frachten durch Steuerung der Verweilzeiten in der Vorklärung möglich ist.

Die folgende Übersicht stellt die zu erwartenden Verhältnisse bei einer mittleren Vorklärzeit von 0,5 Std. (etwa 17 % BSB-Eliminierung) dar.

Es ist zu erkennen, daß die BSB-Raumbelastung im Tagesverlauf ausgeprägten, den Prozeßablauf störenden Schwankungen unterlegen ist.

Während der meisten Stunden mangelt es an biologisch nutzbaren Kohlenstoffverbindungen, oder es ist ein den Gesamtprozeß störender Überschuß vorhanden.

| Belastungsstufen | Abwasser m³/h | BSB-Fracht (kg) | | BSB-Belastung | |
|---|---|---|---|---|---|
|  |  | vor Vorkl. | nach Vorkl. | (kg/m³•d) | kg/kg•d |
| Tagesspitze(2 Std.) | 1750 | 1600 | 1320 | 0,75 | 0,22 |
| Tagesmittel(6 Std.) | 1375 | 3160 | 2623 | 0,50 | 0,14 |
| 24-h-Mittel(8 Std.) | 1030 | 2750 | 2283 | 0,33 | 0,09 |
| Nachtmittel(8 Std.) | 650 | 1310 | 1087 | 0,16 | 0,04 |

Im Primärschlamm werden bei einer Verweilzeit von 0,5 Stunden rund 1500 kg BSB/d bei 17 % der Zulauffracht gebunden.

Erfolgt eine Steuerung der Verweilzeit im Vorklärbecken in Abhängigkeit von der Zulauffracht, dann ergeben sich folgende Verhältnisse:

| | BSB-Fracht (kg) | | BSB-Belastung | |
|---|---|---|---|---|
| | vor Vorkl. | nach Vorkl. | kg/m³·d | kg/kg·d |
| Tagesspitze Verweilzeit: 2 Stunden | 1600 | 1152 | 0,66 | 0,19 |
| Tagesmittel Verweilzeit: 2 Stunden | 3160 | 2275 | 0,43 | 0,12 |
| 24-Std.-Mittel Verweilzeit: 1 Stunde | 2750 | 2145 | 0,31 | 0,09 |
| Nachtmittel Verweilzeit: 0,5 Stunden | 1310 | 1087 | 0,16 | 0,04 |
| gebundener BSB im Primärschlamm: 2160 kg/d (24 %) . | | | | |

Durch die Erfindung ergeben sich vielfältige Möglichkeiten, die biologischen Hauptprozesse zu stimulieren oder zu hemmen bzw., das Milieu den Ansprüchen der Mikroorganismen anzupassen.

Nachfolgend sind die wichtigsten Störeinflüsse und Möglichkeiten zu deren Kompensierung in Abhängigkeit von der Zulaufbelastung nochmals anhand einer Tabelle dargestellt.

| Belastungsstufen | | | | |
|---|---|---|---|---|
| | 1 Überbelastung | 2 mittel bis max. | 3 mittel bis gering | 4 Unterbelastung |
| Vorklärbecken (Verweilzeit, h) | ≥ 1,6 | 1,2 - 1,6 | 0,8 | ≤ 0,4 |
| Steuerstufe 4.1 | aerob, $O_2 = 2g/m^3$ | aerob,$O_2 = 0$-$1$ $g/m^3$ | Umwälzung, $O_2$ ± O | intermitt. Umwälzung |
| $gO_2/m^3$ 4.2 | aerob, | anoxisch, $O_2$± O | Umwälzung, $O_2$ ± O | geringster $O_2$-Eintrag |
| Schlammrückführung aus Nachklärung (Vol.%) | ≥ 100 | 80 - 100 | 60 - 80 | ~ 60 |
| Rückführung von Stufe 5 in Stufe III (Vol.%) | ≥ 200 | 150 - 200 | 150 | ≤ 150 |
| aerobe Stufe 5 ($gO_2/m^3$) | ≥ 2,5 g/m³ | 2,0 g/m³ | 2,0 g/m³ | ≤ 1,5 g/m³ |
| Schlammwäsche | nein | nein | nein | ja |
| Abwasserverteilung | gleichmäßig Stufen I, 2, III | gleichmäßig Stufen I, 2, III | vorwiegend Stufen I, 2 | ausschließlich Stufen I, 2 |
| gespeichertes Abwasser aus Vorklärung | -- | -- | -- | ausschließlich Stufen I, 2 |

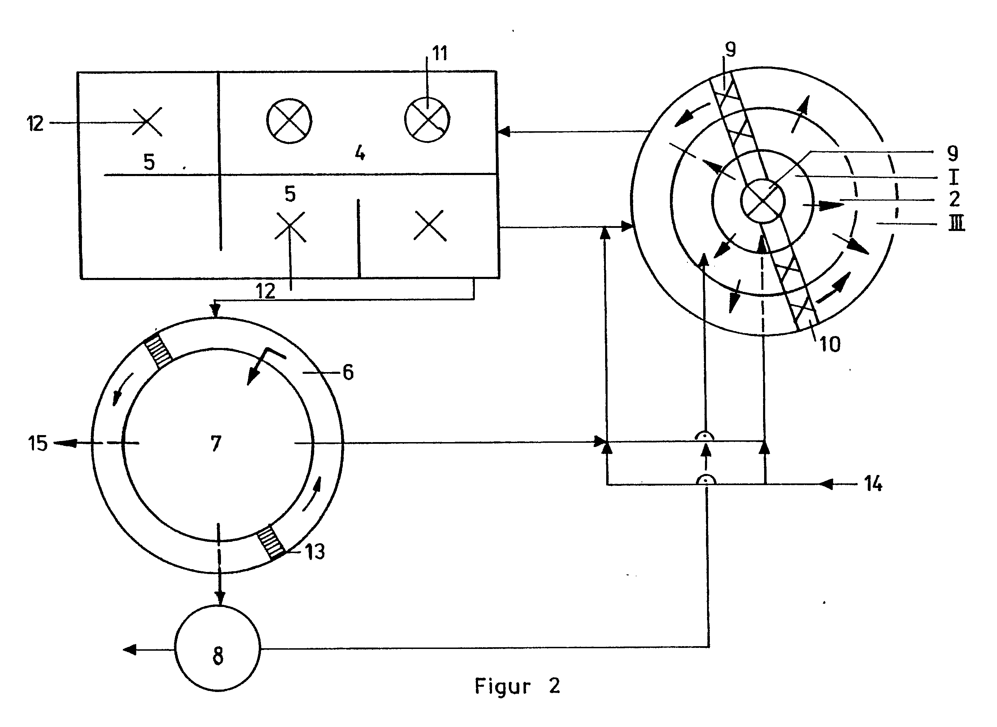

Bei dem 2. Ausführungsbeispiel gemäß Figur 2 stellen die 2 anoxischen und die anaerobe Stufe einen Bauwerkskomplex dar. Obwohl der maßgebliche erfindungsgemäße Verfahrensschritt in diesem Beispiel die Zuführung von Abwasserteilströmen und die Aufteilung des Rücklaufschlammes auf die anoxischen Denitrifikationsstufen beinhaltet, ist eine Erläuterung des gesamten Verfahrens auf der Grundlage einer Anlagenkonzeption, wie sie sich zum Beispiel bei der Rekonstruktion vorhandener Anlagen ergeben kann, erforderlich.

Die entsprechenden Anlagenteile dazu sind:

Eine anoxische Denitrifikationsstufe I, darum konzentrisch angeordnet eine anaerobe Stufe 2 und dazu wieder konzentrisch angeordnet eine anoxische Denitrifikationsstufe III bilden einen Bauwerkskomplex.

Zur Anlage gehören weiterhin ein aerob-anoxisches Becken als Steuerstufe 4, eine aerobe Stufe 5, eine Becken für simultane Nitrifikation und Denitrifikation 6, ein Nachklärbecken 7 und ein Schlammvoreindicker 8.

Die nachstehende Erläuterung bezieht sich auf ein Ausführungsbeispiel dieser Anlagenkonzeption.

Die Abwasserzulaufmenge beträgt 250 m³/h.

Dem Denitrifikationsbecken I, d.h. einer anoxischen Stufe, werden mechanisch nicht vorgereinigtes Abwasser als Teilstrom, ca. 75 m³/h, vom Zulauf 14 der Kläranlage sowie 200 m³/h Rücklaufschlamm aus dem Nachklärbecken 7 zugeführt. Ein langsam laufendes Rührwerk 9 wälzt das Gemisch ständig oder intermittierend um.

Danach gelangt das vom Nitrat befreite Gemisch in das Becken 2, d.h. die anaerobe Stufe, welchem außerdem ein Teilstrom, ca. 75 m³/h vom Zulauf und die Klarphase des Schlammvoreindickers 8 zugegeben wird.

Es erfolgt ein Umwälzen durch Rührer 9, die an einer umlaufenden Brücke 10 angeordnet sind.

Im Becken 2 wird organisch gebundener Stickstoff in Ammonium überführt, und es erfolgt eine Zunahme der Orthophosphatkonzentration in der gelösten Phase.

Das Gemisch gelangt nunmehr in das anoxische Denitrifikationsbecken III.

Dieser Stufe werden wiederum ein Teilstrom, ca. 100 m³/h, vom Zulauf 14 und ca. 50 m³/h Rücklaufschlamm zugeleitet. Durch langsam laufende Rührer erfolgt eine Umwälzung.

Die weitere Behandlung des Mediums erfolgt in einer Steuerstufe, d.h. in einem aerob-anoxischen Rechteckbecken 4 mit regelbaren Belüftungskreiseln 11.

Die anschließend aerobe Behandlung vollzieht sich in Becken 5 mit geeigneten Belüftungseinrichtungen 12, die evtl. ebenfalls Kreisel sind. Im aeroben Becken 5 können zur Verhinderung von Kurzschlußströmungen Strömungsleiteinrichtungen (Schikanen, durchlässige Wände) verwendet werden.

Vom Ablauf des Beckens 5 wird ein Teilstrom, ca. 625 - 750 m³/h, dem Becken 3 zugeführt. Ein weiterer Teilstrom, ca. 500 m³/h, wird in das Becken 6 für simultane Nitrifikation und Denitrifikation gefördert. In dieses Becken 6 wird durch regelbare Belüftungswalzen 13 Luftsauerstoff zur Vermeidung der P-Rücklösung eingetragen.

Aus dem Nachklärbecken 7 gelangen 200 m³/h Rücklaufschlamm in das anoxische Denitrifikationsbecken I und 50 m³/h in das anoxische Denitrifikationsbecken III. Über das Nachklärbecken 7 und Abfluß 15 verläßt das gereinigte Abwasser die Anlage.

## Ansprüche

1. Verfahren zur Steuerung biologischer Prozesse zur Phosphor-und Stickstoffeliminierung in Belebtschlammanlagen unter Einbeziehung der Vorklärung und Anwendung anaerober, anoxischer und aerober Verfahrensstufen, steuerbarer Belüftungseinrichtungen und einem Verteilerregime für das zu reinigende Abwasser und den Rücklaufschlamm, dadurch gekennzeichnet, daß in Abhängigkeit von den Zu- und Ablaufwerten der Anlage während belastungsstarker Zeiten das Abwasser in Vorklärbecken (16) bzw. der Primärschlamm im Schlammspeicher (17) gestapelt wird, während des Speicherprozesses die Hydrolyse und Vergärung organischer Stoffe beginnt, bei belastungsschwachen Zeiten die Verweilzeit des Abwassers im Vorklärbecken (16) stark verkürzt und gleichzeitig gespeicherter Primärschlamm und/oder gespeichertes Abwasser nach eingehendem Vermischen den an oxischen Stufen (I,III) und der anaeroben Stufe (2) zugeleitet wird, der Rücklaufschlamm in zwei Teilströme aufgeteilt wird, indem ein Teilstrom der anoxischen Stufe (I) und ein weiterer Teilstrom der anoxischen Stufe (III) bzw. der Steuerstufe (4.1) zufließt, und daß in Steuerstufen (4 bzw. 4.1, 4.2) anoxische bzw. aerobe Verhältnisse durch Umwälzen bzw. Belüften des Abwassers im Bereich von 0 bis 2 g/m³ Sauerstoff eingestellt werden.

2. Verfahren nach Anspruch 1, dadurch gekennzeichnet, daß mit der Steuerstufe (4.2) im Bereich der aeroben Stufe (5) in den mikrobiologischen Prozeß eingegriffen wird.

3. Verfahren nach den Ansprüchen 1 und 2, dadurch gekennzeichnet, daß das Abwasser im Vorklärbecken (16) während belastungsstarker Zeiten in mindestens drei voneinander getrennten Beckeneinheiten gespeichert wird, die Verweilzeit mindestens 1,5 h beträgt und die Entleerung der Beckeneinheiten in belastungsschwachen Zeiten vorgenommen wird.

4. Verfahren nach den Ansprüchen 1 und 3, dadurch gekennzeichnet, daß der Schlamm in der

7

Schlammsammeltasche des Vorklärbeckens (16) vor der Entleerung intensiv mit dem Abwasser gemischt wird.

5. Verfahren nach den Ansprüchen 1 bis 4, dadurch gekennzeichnet, daß die Steuerung der Anlage unter Berücksichtigung der Zu- und Ablaufwerte auf der Grundlage von Tagesganglinien erfolgt.

6. Verfahren nach den Ansprüchen 1, 2 und 5, dadurch gekennzeichnet, daß die Milieuverhältnisse in den Stufen (4.1, 4.2, 5) durch intermittierenden bzw. kontinuierlichen Lufteintrag eingestellt werden.

7. Verfahren nach den Ansprüchen 1 bis 6, dadurch gekennzeichnet, daß die Menge des aus der aeroben Stufe (5) in die anoxische Stufe (III) zurückgeführten Mediums über die Nitratkonzentration und/oder die Ammoniumkonzentration im Ablauf gesteuert wird.

8. Verfahren nach den Ansprüchen 1 bis 7, dadurch gekennzeichnet, daß während belastungsstarker Zeiten ein Abwasserteilstrom von ca. 10 Vol.-% über einen Intensivreaktor mit immobilisierter Biomasse und einer BSB-Raumbelastung von 10 - 15 kg BSB/m³ · d geleitet wird.

9. Verfahren nach den Ansprüchen 1 bis 8, dadurch gekennzeichnet, daß bei zu erwartender verminderter P-Eliminierung ein Teilstrom aus der anaeroben Stufe (2) über einen Mischreaktor (8) geleitet wird, im Mischreaktor (8) Kalkzugabe bis zu einem pH-Wert > 10 erfolgt und nach der Bildung von Calciumphosphat der Teilstrom der anoxischen Stufe (III) zugeführt wird.

10. Vorrichtung zur Durchführung des Verfahrens nach einem der Ansprüche 1 bis 9, gekennzeichnet durch

- ein Vorklärbecken (16), das vorzugsweise in Längsrichtung abgetrennte Teilbereiche aufweist und in das der Zulauf einmündet,
- einen Schlammspeicher (17), der mit dem Vorklärbecken (16) und dem Zulauf verbunden ist,
- einen Beckenblock (I, III, 2, 4.1, 4.2, 5), der umfaßt:
- eine erste anoxische Stufe (I),
- eine ihr nachgeschaltete anaerobe Stufe (2),
- eine ihr nachgeschaltete zweite anoxische Stufe (III),
- eine ihr nachgeschaltete erste Steuerstufe (4.1),
- eine ihr nachgeschaltete aerobe Stufe (5), in deren mittleren Bereich eine zweite Steuerstufe (4.2) angeordnet ist,
wobei das zu reinigende Abwasser den Stufen I, 2 und/oder III zugeführt werden kann,
sowie
- einen internen Denitrifikationskreislauf, der eine Pumpeinrichtung aufweist, mit der ein Umpumpen von der aeroben Stufe (5) zur zweiten anoxischen Stufe (III) möglich ist
- und gegebenenfalls einen Mischreaktor (18), der mit der ersten anaeroben Stufe (2) und der zweiten anoxischen Stufe (III) so verbunden ist, daß ein Teilstrom aus der ersten anaeroben Stufe (2) in die zweite anoxische Stufe (III) eingeführt werden kann, und mit dem gegebenenfalls ein alkalisches Mittel wie Kalk in den Teilstrom eingeführt werden kann,
- sowie gegebenenfalls eine Einrichtung, mit der Rücklaufschlamm aus einer Nachkläreinrichtung auf die erste anoxische Stufe (I) und die erste Steuerstufe (4.1) verteilt werden kann.

Rücklaufschlamm

Zulauf

16

17

I

4.1.

5.

2

III

5

4.2.

Ablauf

18

EP 0 396 142 A1

Figur 1

Figur 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 246 499 (F. OSTREICHER) <br> * Seite 7, Anspruch 1; Seite 5, Zeilen 9-25 * <br> --- | 1,3,10 | C 02 F 3/30 |
| X | DE-A-3 408 561 (P. ELMERS et al.) <br> * Seite 1, Anspruch 1; Seite 3, Ansprüche 3,6; Seite 6, Ansprüche 19,20; Seite 15, Zeilen 16-31 * | 1,3,10 | |
| A | | 8 | |
| | --- | | |
| D,A | EP-A-0 019 203 (LINDE) <br> * Titelseite, Zusammenfassung * <br> --- | 1 | |
| P,A | EP-A-0 346 013 (ORANGE WATER AND SEWER AUTHORITY) <br> * Titelseite, Zusammenfassung * <br> ----- | 1 | |

RECHERCHIERTE SACHGEBIETE (Int. Cl.5)

C 02 F

Der vorliegende Recherchenbericht wurde für alle Patentansprüche erstellt

| Recherchenort | Abschlußdatum der Recherche | Prüfer |
|---|---|---|
| DEN HAAG | 20-07-1990 | TEPLY J. |